# EUROPEAN PATENT APPLICATION

(11) **EP 2 517 560 A1**
(43) Date of publication of application: **31.10.2012**
(21) Application number: 11163678.3
(22) Date of filing: 26.04.2011
(51) Int. Cl.: A01N 25/08, A01N 25/28, A01N 43/40, A01N 59/16, A01P 1/00, A01P 3/00

(54) **Sustained release system of a biocide**

(71) Applicant: Nederlandse Organisatie voor Toegepast -Natuurwetenschappelijk Onderzoek TNO, 2628 VK Delft (NL)
(72) Inventor: Erich, Sebastiaan, Joannes, Franciscus, 2628 VK Delft (NL); Eversdijk, Jacobus, 2628 VK Delft (NL)
(74) Representative: Jansen, Cornelis Marinus

(57) **Abstract**

The invention is directed to a sustained release system, to a method for preparing a sustained release system, and to a material for construction comprising said sustained release system.

The sustained release system of the invention comprises a microcapsule, said microcapsule comprising an encapsulation material and an amount of one or more metal chelate complexes encapsulated by said encapsulation material of 10 wt.% or more, based on the total weight of matrix material and metal chelate complex together, wherein said one or more metal chelate complexes have one or more free coordination sites.

## Description

The invention is directed to a sustained release system, to a method for preparing a sustained release system, and to a material for construction comprising said sustained release system.

Sustained release of active compounds is applied in many technical fields. Most sustained release systems are formulated such that the active compound is embedded in a matrix material such that the active compound must find its way out of the matrix into the material for construction and subsequently into the environment.

One of the applications in which sustained release systems can be applied is in the field of construction materials. Bio-resistance of buildings and finishing materials usually requires addition of dedicated bioactive chemicals, such as biocides. There are two main reasons to add biocides to materials for constructions. First of all, micro-organisms negatively affect the durability of the material, *i.e.* induce biodegradation. Secondly, biocides are also used to prevent the growth of micro-organisms (algae, fungi and bacteria) that create unhealthy indoor environments or affect the aesthetic value of the materials. Especially in moist environments, such as in a bathroom or shower, microbial fouling can lead to undesirable staining. Removal of such microbial fouling is often not easy and frequently requires chemical that are environmentally harmful.

A promising class of biocides are metal chelate complexes, in particular metal pyrithione complexes. Sustained release of metal pyrithione complex biocides in a paint composition comprising a clay swelling agent has been disclosed in US-A-5 246 489. In accordance with the invention described therein, however, both components are separately included in the paint composition.

Intercalation of metal chelate complexes, such as pyrithione complexes, in clay for sustained release in construction material has been suggested in WO-A-2009/072888. However, the inventors found that such inclusion is very limited due to the low solubility of these metal chelate complexes in appropriate solvents, in particular complexes of pyrithione with polyvalent metals. For example, zinc pyrithione has a water solubility of 10-20 ppm at room temperature and pH 7, which increases to 35-50 ppm at pH 8. In ethanol, the solubility is 290 ppm, in acetone the solubility is 700 ppm, in benzene the solubility is 3-5 ppm, and in diethylether the solubility is 0 ppm. Due to this low solubility it is only possible to prepare sustained release systems having a relatively low content of the biocide. At the same time, the preparation of such sustained release systems comprising metal chelate complexes is typically accompanied with the substantial amounts of organic solvents. From an environmental point of view this is not desirable.

Hence, an objective of the invention is to provide a sustained release system comprising a considerable amount of one or more metal chelate complexes having one or more free coordination sites.

Further objective of the invention is to provide method of preparing a sustained release system with a considerable amount of one or more metal chelate complexes having one or more free coordination sites.

Yet a further objective of the invention is to provide a method of preparing a sustained release system which method requires a limited amount of solvent.

The inventors found that one or more of these objectives can, at least in part, be met by solubilising the one or more metal chelate complexes using a suitable solubilising agent.

Accordingly, in a first aspect the invention is directed to a sustained release system comprising a microcapsule, said microcapsule comprising an encapsulation material and an amount of one or more metal chelate complexes encapsulated by said encapsulation material of more than 10 wt.%, based on the total weight of encapsulation material and metal chelate complex together, wherein said one or more metal chelate complexes have one or more free coordination sites.

By pre-treating the metal chelate complex with an appropriate solubilising agent it was found to be possible to prepare a sustained release system having a content of more than 10 wt.%, based on the total weight of matrix material and metal chelate complex together. At the same time, the preparation can be performed using a reduced amount of solvent. The sustained release system may be a controlled release system.

The term "sustained release" as used herein is meant to refer to release, which is not immediate release and is taken to encompass controlled release, sustained release, prolonged release timed release, retarded release, extended release, delayed release, *etc.*

The term "microcapsule" as herein is meant to refer to both microcapsules having a discrete microcapsule wall, and microcapsules wherein the internal phase constituents (including the one or more metal chelate complexes) are simply dispersed in the encapsulation material. Dimensions of microcapsules are typically of the order of 1 - 1000 µm depending on the encapsulation technology used and the field of application in mind. Shapes of microcapsules may vary and include but are not limited to spherical, ellipsoidal and polygonal formations. The form of encapsulation can vary from being evenly spaced throughout the encapsulation matrix, to being confined in one part, for example in case of a core-shell microcapsule particle.

Furthermore, by encapsulating the metal chelate complex in the microcapsule using the encapsulation material it is better protected for possible external influences, such as chemical attacks, that could decrease the activity (such as biocidal activity) of the metal chelate complex.

As will be described below, in the preparation of the sustained release system of the invention it is advantageous to use one or more solubilising agents for increasing the solubility of the one or more metal chelate complexes. A residual amount of solubility agent for the metal chelate complex may be present in the final product. Hence, in an embodiment the sustained release system of the invention comprises a solubility agent for the metal chelate complex.

Upon preparation, the sustained release systems of the invention can still comprise some remains of the one or more solubilising agents in the microcapsule. Accordingly, the invention further provides a sustained release system as described herein, wherein the microcapsule further comprises a solubilising agent. The amount of the remaining solubilising agent in the final sustained release system is preferably at most 0.5 wt.% based on total weight of the microcapsule, more preferably at most 0.1 wt.%.

In an embodiment, the encapsulation material comprises an inorganic layered material, wherein the inorganic layered material is modified with one or more ionic organic modifier compounds.

The inorganic layered material can be a negatively charged material, or a positively charged material. Suitable negatively charged inorganic layered materials include layered clays, such as smectite, montmorillonite, kaolinite, vermiculite, bentonite, saponite, and hectorite. Suitable positively charged inorganic layered materials include layered double hydroxides, such as hydrotalcites. Preferably, the inorganic layered material to be used in the invention comprises layered clay and/or layered double hydroxide.

In case the inorganic material is charged, it can suitably comprise counter ions. The nature of the counter ions can vary and is not critical to the invention. For negatively charged inorganic materials these counter ions can for instance comprise one or more selected from the group consisting of Na⁺, K⁺, Mg²⁺, and Ca²⁺. For positively charged inorganic materials these counter ions can for instance comprise one or more selected from the group consisting Of CO₃²⁻, Cl-, NO₃⁻, and SO₄²⁻.

In order to improve the affinity of charged inorganic layered materials for the metal chelate complexes, they can be modified. It is, for example, possible to substitute counter ions that are present between the layers of positively charged or negatively charged inorganic layered material with ionic organic modifier compounds and thereby change the hydrophobicity of the layered material and improve the affinity of the inorganic layered materials for the metal chelate complexes. This principle is well-known for layered clay materials. Layered clay that is modified with such ionic organic modifier compounds is commonly referred to as organoclay.

By carefully selecting the type and amount of the ionic organic modifier compounds used and matching this to the specific metal chelate complex that is used, it is possible to delicately control the affinity of the metal chelate complex for the modified inorganic layered material and over the release rate of the metal chelate complex from the inorganic layered material. It is therefore preferred that the one or more ionic organic modified compounds have a chemical and/or physical interaction with the metal chelate complex, such as an ionic interaction and/or a hydrogen bond interaction.

Typically, modification of the inorganic layered material involves swelling of the inorganic layered material in a solvent, thereby increasing the interlayer distance, which is defined as the shortest distance between individual layers. Next, the one or more ionic organic modifier compounds are intercalated between the layers by means of ion exchange against the available solvated counter ions present in the inorganic layered material. The ionic organic modifier compound can already be contained in the solvent used for increasing the interlayer distance of the inorganic layered material. Finally, the interlayer distance is again reduced by removal of solvent.

In a special embodiment, the ionic organic modifier compound is intercalated into the interlayer environment of the inorganic layered material together with the metal chelate complex. An advantage of this embodiment is that less intercalation steps are required in preparing the sustained release system of the invention. However, in accordance with this embodiment both the ionic organic modifier compound and the metal chelate complex should be sufficiently soluble in the solvent used for increasing the interlayer distance. Alternatively, the metal chelate complex can be solubilised at a molecular level, such as in micelles.

Suitable solvents for introducing the one or more ionic organic modifier compounds include water and mixtures of water with water-soluble solvents including THF (tetrahydrofuran), ethanol, acetone and acrylonitrile.

In a special embodiment of the invention, the inorganic material is intercalated and thereby modified with a mixture of at least two different ionic organic modifier compounds. This allows an even better control over the affinity of the metal chelate complex for the modified inorganic material and over the release rate of the metal chelate complex from the inorganic material, since the hydrophilicity of the layers can be adjusted in a very delicate way by choice of type and ratio of the two different organic modified compounds.

The efficacy of modification can be tested by thermo gravimetric analysis (TGA). In a preferred embodiment, at least 25 %, preferably at least 50 %, more preferably at least 90 %, such as 100 % of the exchange capacity of the inorganic material is occupied by the one or more ionic organic modifier compounds.

The interlayer distance of the modified inorganic material depends on the size of the one or more ionic organic modifier compounds. The interlayer distance can typically be increased with respect to the initial, non-modified inorganic material with 20 %, preferably with 50 %. Increasing the interlayer distance of the initial, non-modified inorganic material with more than 500 % can destabilise the inorganic material. Accordingly, the interlayer distance of the modified inorganic material is preferably 20-500 %, more preferably 20-300 % with respect to the interlayer distance of the initial, non-modified inorganic material.

Any charged organic compound can suitably be used as ionic organic modified compound. In particular, this encompasses positively charged compounds (such as ammonium, phosphonium compounds, sulphonium compounds, and mixtures thereof), and negatively charged compounds (such as the conjugate bases of carboxylic acids, phosphonic acids and sulphonic acids), and mixtures thereof. Also salts of these compounds may be used. Some hydrophobic ionic organic modifier compounds that can suitably be used in accordance with the invention include dihydrogenated tallow dimethyl ammonium chloride, ditallow dimethyl ammonium chloride, hydrogenated tallow trimethyl ammonium chloride, tallow trimethyl ammonium chloride, hexadecyl trimethyl ammonium chloride, coco trimethyl ammonium chloride, oleyl trimethyl ammonium chloride, tallow trimethyl ammonium chloride, tetradecyl trimethyl ammonium bromide, didecyl dimethyl ammonium chloride, dioctyl dimethyl ammonium chloride. Also ammonium compounds derived from the amines can be used, such as dodecyl amine, octadecyl amine, coca amine, oleyl amine, hydrogenated tallow amine, tallow amine, dihydroginated tallow amine, hexadecyl dimethyl amine, coco dimethyl amine, oleyl dimethyl amine, didecyl methyl amine, dicoco methyl amine, and dihydrogynated tallow methyl amine. Some hydrophilic ionic organic modifier compounds that can suitably be used in accordance with the invention include dipolyoxyethylene tallow methyl ammonium chloride, and ammonium compounds derived from the polyoxyalkyleneamines, such as polyoxyalkylenemonoamines, polyoxyalkylenediamines, and polyalkylenetriamines. Suitable examples include the following polyoxyalkyleneamines under the trade name Jeffamine^{®} (commercially available from Huntsman Corporation, USA) M1000, M2005, M2070, D230, D400, D2000, D4000, ED600, ED900, ED2003, EDR148, EDR176, T403, T3000 and T5000.

Positively charged organic compounds can be used in combination with negatively charged inorganic materials, while negatively charged organic compounds can be used in combination with positively charged inorganic materials.

The one or more ionic organic modifier compounds which are introduced in the inorganic material increase the affinity of the inorganic material for the one or more metal chelate complexes.

In another embodiment the encapsulation material comprises or is a charged cross-linked carbohydrate or protein polymer and release of the active component is triggered by contact of the microcapsule with an external stimulus. Such microcapsules have been previously described, for instance, in WO-A-2004/105485, which is herewith incorporated by reference.

In this embodiment, the carbohydrate polymer can be modified by oxidation, substitution with cationic functional groups or with carboxymethyl groups, or esterification *e.g.* by acetyl groups. The carbohydrate or protein polymer may be chosen from the group consisting of starch or a derivative of starch, cellulose or a derivative of cellulose, pectin or a derivative of pectin, and gelatine or a derivative of gelatine. Further, the cross-linker can be chosen from the group consisting of divinyl sulphone, epichlorohydrin, a di-epoxide such as glycerol diglycidyl ether or butanedioldiglycidyl ether, sodium trimetaphosphate and adipic acid or derivatives thereof. The polymer may also be cross-linked by means of a cross-linking enzyme chosen from the group consisting of peroxidises, laccases, polyphenol oxidases, lysyl oxidases, and lipoxygenases. The external stimulus triggering the release of the compound can be an enzyme which is able to degrade the polymer, a change of electrostatic interaction, a change in the pH, and/or a change in the salt concentration.

The sustained release system of the invention comprises one or more metal chelate complexes that have one or more free coordination sites. The term "coordination site" as used in this application is meant to refer to a point on a metal ion that can accept an electron pair donated, for example, by a liquid or chelating agent. The term "free coordination site" as used in the application is meant to refer to a coordination site on a metal ion that is vacant or occupied by a species that is weakly donating. Such species is readily displaced by another species, such as a Lewis base.

In a metal chelate complex, a metal atom is complexed with one or more chelators. The term "chelator" as used in this application is meant to refer to an organic chemical that can form two or more coordination bonds with a metal ion. The metal chelate complex formed by complexing the metal ion with the chelator comprises heterocyclic rings with the metal atom as part of the ring.

In an embodiment, the one or more metal chelate complexes comprise a metal pyrithione complex, in which a metal ion is complexed with one or more pyrithione chelators. Pyrithione in the context of this application is meant to refer to pyridine-2-thiol-1-oxide. These complexes are known to have particular biocidal effectivity. Exemplary metal pyrithione complexes include zinc pyrithione, iron pyrithione, aluminium pyrithione, magnesium pyrithione, calcium pyrithione, and copper pyrithione. Preferably, the metal chelate complexes comprise zinc pyrithione and/or copper pyrithione. Pyrithiones in general are known to be excellent biocides.

In accordance with the invention, the amount of the one or more metal chelate complexes encapsulated by the encapsulation material can be 12-60 wt.% based on the total weight of encapsulation material and metal chelate complex together, such as 15-60 wt.% or 20-60 wt.%, preferably 35-50 wt.%. Such high loadings of metal chelate complexes having one or more free coordination sites in an encapsulation material was heretofore not possible unless enormous amounts of solvent had to be used. Achieving such high loadings of the metal chelate complexes in a sustained release system opens a whole new spectrum of applications for the metal chelate complexes, such as in construction.

Preferably, the one or more metal chelate complexes comprise a biocide, such as a fungicide, algicide and/or a bactericide.

In a preferred embodiment of the invention, the matrix material comprises an organoclay material and the one or more metal chelate complexes are intercalated in the organoclay. This means that the one or more metal chelate complexes are present between the stacks of organic modified clay platelets. In this embodiment, the release is sustained by increased diffusion pathways and the hydrophobic interactions of the metal chelate complex and the organic modifier compound present on the clay platelets surface.

In order to achieve a high loading of the metal chelate complex with one or more free coordination sites in the encapsulation material, it is required that the solubility of the metal chelate complex (which is typically low) is increased. The inventors surprisingly found that this can be achieved by mixing the metal chelate complex with a suitable solvent and one or more solubilising agents capable of solubilising the chelate complex in the used solvent.

Accordingly, in a further aspect the invention is directed to a method for preparing a sustained release system, preferably as described herein, comprising
i) solubilising one or more metal chelate complexes in a first solvent using one or more solubilising agents capable of increasing the solubility of the one or more metal chelate complexes in said first solvent;
ii) providing an encapsulation material, mixing the encapsulation material in a second solvent which is miscible with the first solvent;
iii) mixing the solubilised one or more metal chelate complexes with the mixture of said encapsulation material in said second solvent, thereby encapsulating said one or more metal chelate complexes in said encapsulation material;
iv) evaporating first and second solvent; and
v) evaporating solubilising agent.

In an embodiment said encapsulation material is an inorganic layered material, modified with one or more ionic organic modifier compounds, and the mixing of the inorganic layered material in the second solvent in step (ii) leads to swelling of the inorganic layered material, and the mixing of the solubilised one or more metal chelate complexes with the mixture of the encapsulation material in the second solvent in step (iii) leads to intercalation of the inorganic layered material with the one or more metal chelate complexes.

If the encapsulation material is an inorganic layered material that is modified with an ionic organic modifier compound, this compound can in an embodiment simultaneously act as a solubilising agent. In that case, a method for preparing a sustained release system, preferably as described herein, comprises
i) solubilising the one or more metal chelate complexes in a first solvent using one or more solubilising agents capable of increasing the solubility of the one or more metal chelate complexes in said first solvent, wherein said one or more solubilising agents comprise one or more ionic organic modifier compounds for modifying a layered inorganic material;
ii) providing a layered inorganic material, and swelling the inorganic material in a second solvent which is miscible with the first solvent;
iii) mixing the solubilised one or more metal chelate complexes with the swelled inorganic layered material, thereby modifying the inorganic material with one or more ionic organic modifier compounds and intercalating the layered material with one or more metal chelate complexes;
iv) evaporating first and second solvent; and
v) optionally evaporation solubilising agent.

Importantly, in this process the one or more metal chelate complexes are solubilised in the first solvent using one or more solubilising agents. The one or more solubilising agents are capable of increasing the solubility of the one or more metal chelate complexes in a solvent.

In an embodiment, the one or more solubilising agents comprise one or more amines. These amines can be hydrophobic or hydrophilic in nature. In an embodiment, the one or more solubilising agents comprise one or more hydrophobic amines. The term "hydrophobic amine" as used in this application is meant to refer to a compound containing at least one hydrophobic group and at least one amine group. As used herein the term "hydrophobic" refers to an amine that has a solubility in water of no more than 200 micrograms per milliliter. Representative hydrophobic amines include benzylamines, alkyl amines and allyl amines. Examples thereof include cyclohexylamine, hexylamine, methylhexylamine, phenethylamine, octylamine, oleylamine, decylamine, dodecylamine, octadecylamine, and the like.

In a further embodiment the one or more solubilising agents comprise 2,4-pentanedione and/or adducts thereof. An advantage of these type of solubilising agents is that they can be used in a broad pH range (*viz*. including in acidic environments).

Upon preparation, the sustained release systems of the invention can still comprise some remains of the one or more solubilising agents in the microcapsule. Accordingly, the invention further provides a sustained release system as described herein, wherein the microcapsule further comprises a solubilising agent. The amount of the remaining solubilising agent in the final sustained release system is preferably at most 0.5 wt.% based on total weight of the microcapsule, more preferably at most 0.1 wt.%.

In a special embodiment of the invention the one or more solubilising agents comprise one or more ionic organic modifier compounds, so that the one or more solubilising agents can at the same time act as modifier compound for the inorganic layered material. To this effect, the one or more solubilising agents can, for instance, include an ammonium, phosphonium, or sulphonium group. Hence, in accordance with this embodiment at least part of the one or more ionic organic modified molecules are identical to or the same as the one or more solubilising agents. Examples of suitable compounds for this purpose include ammonium amines, phosphonium amines and sulphonium amines.

Without wishing to be bound by theory, the inventors believe that suitable solubilising agents, such as hydrophobic amines, are capable of occupying one or more of the free coordination sites of the metal chelate complex, thereby increasing the overall solubility of the metal chelate complex. Hence, in a preferred embodiment the molar amount of solubilising agent used per molar amount of metal chelate complex more or less corresponds to the available free coordination sites. For example, if the metal chelate complex has two free coordination sites, then the applied stoichiometric ratio between the metal chelate complex and the solubilising agent is preferably about 1:2 and can be for instance be 1:0.5 or more, such as 1:1 or more, or 1:2 or more. Alternatively, if the metal chelate complex has one free coordination site, then the applied stoichiometric ratio between the metal chelate complex and the solubilising agent is preferably about 1:1, and can for instance be 1:0.2 or more, such as 1:0.5 or more, or 1:1 or more. The upper limit is not critical, because adding more solubilising agent does not lead to a decrease in solubility. From a practical point of view, however, it may not be cost efficient to use an amount of solubilising agent exceeding the available amount of free coordination sites by 4 times or more.

In step ii) of the process of the invention, the encapsulation material is mixed in a suitable second solvent. In the case of an inorganic layered material this can involve swelling of the material. In any case the second solvent should be miscible with the first solvent, and preferably the second solvent is the same as the first solvent. Preferably, the first and second solvent are both independently chosen from the group consisting of tetrahydrofuran, toluene, acrylonitrile, ethylacetate, ethanol, isopropanol, and mixtures of water with water soluble solvents.

In the special embodiment described above according to which the one or more solubilising agents comprise one or more ionic organic modifier compounds, then in step ii) it is not required to provide a modified inorganic layered material. The inorganic layered material can then be modified upon mixing in step iii).

After having mixed the one or more pre-treated metal chelate complexes with the encapsulation material, the process comprises evaporating first and second solvent. Such evaporation may be achieved, for instance, by rotational evaporation or the like. During evaporation of first and second solvent, the layers of the inorganic layered material again form stacks with the one or more metal chelate complexes included between the layers.

Upon further evaporation, solubilising agent may be removed to obtain the sustained release system of the invention. Surprisingly, the inventors found that (where the solubilising agent does not simultaneously act as ionic organic modifier compound for an inorganic layered material) in the absence of evaporating solubilising agent, the one or more metal chelate complexes are relatively quickly released without the desired control. This further evaporation step v) typically involves a lower pressure and/or a higher temperature than the evaporation step iv). Evaporation of solubilising agent depends slightly on the solubilising agent used, but typically involves reducing the pressure to 0.1 mbar or less, preferably 0.01 bar or less, such as in the range of 10-0.01 mbar. In addition, the temperature may be increased to 40 °C or more, preferably 50 °C or more, such as in the range of 40-150 °C. If the solubilising agent simultaneously acts as an ionic organic modifier compound for an inorganic layered material, then this optional evaporation step can be omitted. Optionally excess solubilising agent may, however, still be removed by evaporation techniques.

After evaporation, a solid material is obtained that can be milled to a particle size desirable for the intended application. The milled material may optionally be sieved in order to obtain a better defined particle size distribution.

In yet a further aspect the invention is directed to a material for construction comprising a sustained release system according to the invention, or a sustained release system obtainable by the method of the invention.

The material for construction can be any kind of material suitable for construction purposes, both organic and inorganic materials. Some examples include cement, plaster, jointing compound, plasterboard, paint, glue, plastics, wallpaper, wood, textiles, straw, thatch, plywood, Oriented Strand Board, particle board, or Medium-Density Fibreboard. In an embodiment, the material for construction is a construction material and the one or more metal chelate complexes comprise a biocide.

The amount of the one or more metal chelate complexes acting as biocide in the material for construction according to the invention can be low in comparison to the amount of biocides conventionally used in construction materials. Typically, the amount of metal chelate complex loaded matrix material used in the material of the invention is in the range of 0.01-20 wt.%, based on the total weight of the material for construction. This corresponds to an amount of 1-60 000 ppm. For instance, the amount of metal chelate complex loaded matrix material in the material for construction can be 0.02-20 wt.% such as 0.1-20 wt.% or 50-60 000 ppm. Preferably, the amount of loaded matrix material used in the material for construction is in the range of 0.01-10 wt.%, based on the total weight of the material for construction. This corresponds to an amount of 1-30 000 ppm of metal chelate complex in the material for construction, based on the total weight of the material for construction. For instance, the preferred amount of metal chelate complex loaded matrix material in the material for construction is 0.1-10 wt.%, such as 1-10 wt.% or 50-30 000 ppm. Preferably, the matrix material comprises an inorganic layered material, wherein the inorganic layered material is modified with one or more ionic organic modifier compounds.

The encapsulation material in the material for construction can comprises at least 1 wt.% of the one or more metal chelate complexes, based on the total weight of the encapsulated material. In an embodiment, the matrix material comprises an inorganic layered material which is modified with one or more ionic organic modifier compounds, and the inorganic layered material comprises at least 1 wt.% of the one or more metal chelate complexes, based on the total weight of the modified and loaded inorganic layered material.

An advantage of the present invention is that metal chelate complex release is increased in moist environments. Such moist or damp environments are often the cause of microbial fouling and therefore an increase in the amount of released metal chelate complex acting as biocide is effective in reducing or preventing the microbial fouling.

Metal chelate complex not yet released is stabilised by the protective environment of the matrix material, in particular when applying an inorganic layered material, against premature degradation due to potentially harmful external influences such as high alkalinity (often present in materials for construction), chemical attacks and/or ultraviolet radiation.

### Examples

### Example 1 (comparative)

The conventional manner of producing intercalated zinc pyrithion in an organoclay, with a loading of 10 wt.% of said zinc pyrithion, can be described as follows:
With mechanical stirring 45 g of organoclay (Cloisite 20) was dispersed in 1 litre of boiling tetrahydrofuran (boiling point THF: 66 °C) in order to achieve exfoliation of the clay platelets. Separately, a zinc pyrithion solution of 5 g zinc pyrithion in 1 litre of boiling tetrahydrofuran was prepared. The latter solution was added hot to the stirred organoclay dispersion. The mixture was kept overnight at boiling temperature under reflux. Subsequently, the mixture was cooled to 20 °C. The tetrahydrofuran was removed by rotational evaporation (40 °C and 100 mbar). The remaining solid mass was milled down to a powder and fractionated using sieves with specific maze sizes.

The amount of organic solvent necessary to produce a composition of zinc pyrithion intercalated in organoclay containing 1 kg of zinc pyrithion amounted to 400 litres of THF. This ratio of active and solvent will make it very difficult to upscale the process for commercial applications. Furthermore, the intercalation process had to be performed at 65 °C to dissolve the zinc pyrithion completely at above mentioned concentrations. This also is an obstacle for an cost and environmental feasible production of the material.

### Example 2 (inventive)

To minimize the amount of solvent and limit the amount of required thermal energy, a new inventive process has been found. This process not only requires less solvent and energy but inherently can enhance the amount of active in the end material to much higher loading. For instance, to intercalate 40 wt.% of zinc pyrithion in an organoclay the following adapted procedure was used: 6.7 g of benzyl amine was dissolved in 150 ml of tetrahydrofuran at 20 °C. Subsequently, 5 g of zinc pyrithion was added and the mixture was stirred until complete dissolution was obtained. 6.7 g of organoclay (Cloisite 20A) was added under stirring at 20 °C until the clay was homogenously exfoliated. The tetrahydrofuran was removed by rotational evaporation (40 °C and 100 mbar). Subsequently, the temperature was raised to 75 °C and the pressure reduced to 0.1 mbar to remove the majority of the benzylamine. The remaining solid mass was milled down to a powder and fractionated using sieves with specific maze sizes.

The amount of organic solvent necessary to produce a composition of zinc pyrithion intercalated in organoclay containing 1 kg of zinc pyrithion here only amounted to 30 litres of THF, which makes the process commercially viable. No elevated temperature was needed to perform the intercalation process when benzylamine was used as a solubilizing agent.

## Claims

1. Sustained release system comprising a microcapsule, said microcapsule comprising an encapsulation material and an amount of one or more metal chelate complexes encapsulated by said encapsulation material of 10 wt.% or more, based on the total weight of matrix material and metal chelate complex together, wherein said one or more metal chelate complexes have one or more free coordination sites.

2. Sustained release system according to claim 1, wherein the encapsulation material comprises an inorganic layered material, wherein the inorganic layered material is modified with one or more ionic organic modifier compounds.

3. Sustained release system according to claim 1 or 2, further comprising a solubility agent for said metal chelate complex, preferably at most 0.5 wt.% based on total weight of the microcapsule, more preferably at most 0.1 wt.%.

4. Sustained release system according to any one of claims 1-3, wherein the amount of the one or more metal chelate complexes encapsulated by said encapsulation material is 20-60 wt.% based on the total weight of encapsulation material and metal chelate complex together, such as 30-60 wt.%, preferably 35-50 wt.%.

5. Sustained release system according to any one of claims 2-4, wherein the one or more ionic modifier compounds comprise one or more chosen from the group consisting of ammonium compounds, phosphonium compounds, sulphonium compounds, conjugate bases of carboxylic acids, conjugate bases of phosphonic acids, conjugate bases of sulphonic acids, and salts thereof.

6. Sustained release system according to any one of claims 2-5, wherein the inorganic material comprises
- a negatively charged clay, such as smectite, montmorillonite, kaolinite, vermiculite, bentonite, saponite, and hectorite; and/or
- a positively charged layered double hydroxide, such as hydrotalcite.

7. Sustained release system according to any one of claims 1-6, wherein the one or more metal chelate complexes comprise a biocide, preferably a fungicide, algicide and/or a bactericide.

8. Sustained release system according to any one of claims 1-7, wherein the one or more metal chelate complexes comprises a metal pyrithione complex, preferably selected from the group consisting of zinc pyrithione, iron pyrithione, aluminium pyrithione, magnesium pyrithione, calcium pyrithione, and copper pyrithione.

9. Sustained release system according to any one of claims 1-8, wherein the microcapsule further comprises a solubilising agent, the amount of the solubilising agent being preferably at most 0.5 wt.% based on total weight of the microcapsule, more preferably at most 0.1 wt.%.

10. Method for preparing a sustained release system, preferably accordingly to any one of claims 1-9, comprising
i) solubilising the one or more metal chelate complexes in a first solvent using one or more solubilising agents capable of increasing the solubility of the one or more metal chelate complexes in said first solvent;
ii) providing an encapsulation material, and mixing the encapsulation material in a second solvent which is miscible with the first solvent;
iii) mixing the solubilised one or more metal chelate complexes with the mixture of said encapsulation material in said second solvent, thereby encapsulating said one or more metal chelate complexes in said encapsulation material;
iv) evaporating first and second solvent; and
v) evaporating solubilising agent.

11. Method according to claim 9, wherein said encapsulation material is an inorganic layered material, modified with one or more ionic organic modifier compounds, and wherein the mixing of the inorganic layered material in the second solvent in step (ii) leads to swelling of the inorganic layered material, and wherein the mixing of the solubilised one or more metal chelate complexes with the mixture of the encapsulation material in the second solvent in step (iii) leads to intercalation of the inorganic layered material with the one or more metal chelate complexes.

12. Method for preparing a sustained release system, preferably according to any one of claims 2-9, comprising
i) solubilising the one or more metal chelate complexes in a first solvent using one or more solubilising agents capable of increasing the solubility of the one or more metal chelate complexes in said first solvent, wherein said one or more solubilising agents comprise one or more ionic organic modifier compounds for modifying an inorganic layered material;
ii) providing an inorganic layered material, and swelling the inorganic layered material in a second solvent which is miscible with the first solvent;
iii) mixing the solubilised one or more metal chelate complexes with the swelled inorganic layered material, thereby modifying the inorganic material with one or more ionic organic modifier compounds and intercalating the inorganic layered material with one or more metal chelate complexes;
iv) evaporating first and second solvent; and
v) optionally evaporating solubilising agent.

13. Method according to claim 11 or 12, wherein at least part of the one or more ionic organic modified molecules is identical to or the same as the one or more solubilising agents.

14. Method according to any one of claims claim 10-13, wherein said one or more solubilising agents comprise an amine, in case of a hydrophobic amine, preferably the hydrophobic amine is selected from the group consisting of alkyl amines, benzyl amines, and allyl amines.

15. Method according to claim 10-14, wherein said first solvent and said second solvent are selected from the group consisting of tetrahydrofuran, toluene, acrylonitrile, ethylacetate, ethanol, isopropanol and mixtures of any of these solvents with water, and wherein preferably the first solvent is the same as the second solvent.

16. Material for construction comprising a sustained release system according to any one of claims 1-9, or a sustained release system obtainable by the method of any one of claims 10-14.

17. Material for construction according to claim 16, wherein said material comprises 1-60 000 ppm by weight of the one or more metal chelate complexes, based on the total weight of the material for construction, preferably 50-60 000 ppm, more preferably 50-30 000 ppm.

18. Material for construction according to claim 16 or 17, wherein the encapsulation material comprises at least 1 wt.% of the one or more metal chelate complexes, based on the total weight of the encapsulated material.

19. Material for construction according to any one of claims 16-18, in the form of cement, plaster, jointing compound, plasterboard, paint, glue, plastics, wallpaper, wood, textiles, straw, thatch, plywood, Oriented Strand Board, particle board, or Medium-Density Fibreboard.
